# EUROPEAN PATENT APPLICATION

(11) **EP 4 651 254 A1**
(43) Date of publication of application: **19.11.2025**
(21) Application number: 23933847.8
(22) Date of filing: 28.11.2023
(51) Int. Cl.: H01M 10/0565, H01M 10/052, H01M 10/0525

(54) **GEL POLYMER ELECTROLYTE AND PREPARATION METHOD THEREFOR, BATTERY, CHARGING AND DISCHARGING METHOD OF BATTERY, AND ELECTRIC DEVICE**

(30) Priority: 19.04.2023 CN 202310424149
(71) Applicant: Contemporary Amperex Technology Co., Limited, Ningde, Fujian 352100 (CN)
(72) Inventor: SONG, Shaokang, Ningde, Fujian 352100 (CN); XUE, Wenwen, Ningde, Fujian 352100 (CN); LIU, Chengyong, Ningde, Fujian 352100 (CN); HE, Xiaoning, Ningde, Fujian 352100 (CN)
(74) Representative: Ziebig Hengelhaupt Intellectual Property Attorneys Patentanwaltskanzlei PartGmbB
(86) International application number: PCT/CN2023/134691
(87) International publication number: WO 2024/216981

(57) **Abstract**

The present disclosure discloses a gel polymer electrolyte and a preparation method therefor, a battery, a charging and discharging method of a battery, and an electrical device. The gel polymer electrolyte has a first state at a first temperature and a second state at a second temperature. The first state and the second state are mutually transitionable. The first temperature is higher than the second temperature. A degree of crosslinking of the gel polymer electrolyte in the second state is higher than a degree of crosslinking of the gel polymer electrolyte in the first state. Therefore, a battery including the gel polymer electrolyte of the present disclosure still has a high capacity retention rate and high rate performance after multiple cycles.

## Description

### CROSS-REFERENCE TO RELATED APPLICATIONS

This application claims priority to and the benefit of Chinese Patent Application No. 202310424149.1 filed on April 19, 2023 with the State Intellectual Property Office of China, which is incorporated herein by reference in its entirety.

### TECHNICAL FIELD

The present disclosure relates to the technical field of secondary batteries, and specifically to a gel polymer electrolyte and a preparation method therefor, a battery, a charging and discharging method of a battery, and an electrical device.

### BACKGROUND

At present, batteries on the market mainly use a liquid electrolyte as an ion conduction medium. When a battery is overcharged, overheated, short-circuited, or impacted, an accident is likely to occur.

Therefore, using a gel polymer electrolyte instead of a liquid electrolyte as an ion conduction medium is an effective solution to reduce the probability of battery accidents. However, the capacity retention rate and the rate performance of conventional batteries using a gel polymer electrolyte are significantly reduced after multiple cycles.

### SUMMARY

In view of the technical problems in the background section, the present disclosure provides a gel polymer electrolyte, to solve the problem that the capacity retention rate and the rate performance of a battery including the gel polymer electrolyte are significantly reduced after multiple cycles.

To achieve the above objective, a first aspect of the present disclosure provides a gel polymer electrolyte, where the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state.

Compared with the prior art, the present disclosure has at least the following beneficial effects. After the battery undergoes multiple cycles at the second temperature, a gap is formed between a battery electrode and an interface of the gel polymer electrolyte, leading to continuous deterioration of the battery capacity. When the temperature of the battery is raised to the first temperature, the gel polymer electrolyte depolymerizes. In this case, the mobile phase in the gel polymer electrolyte increases, so that the battery electrode and the gel polymer electrolyte become tightly combined, thus restoring the capacity of the battery. In addition, as the mobile phase in the gel polymer electrolyte increases, the ionic conductivity of the gel polymer electrolyte can be improved, thus improving the rate performance of the battery.

In some embodiments of the present disclosure, a ratio of the degree of crosslinking of the gel polymer electrolyte in the first state to the degree of crosslinking in the second state ranges from 0.2 to 0.95:1. As such, when the ratio is within the above range, the capacity retention rate and the rate performance of the battery at the first temperature can be further improved.

In some embodiments of the present disclosure, the first temperature is greater than or equal to 40°C, optionally 40°C to 120°C. As such, the gel polymer is in the first state within the above temperature range, so that the capacity retention rate and the rate performance of the battery at the first temperature can be further improved.

In some embodiments of the present disclosure, the degree of crosslinking of the gel polymer electrolyte in the first state ranges from 20% to 48.5%. As such, the degree of crosslinking of the gel polymer is relatively low within the above range of the degree of crosslinking, so that the capacity retention rate and the rate performance of the battery in the first state can be improved.

In some embodiments of the present disclosure, the second temperature ranges from -25°C to 35°C.

In some embodiments of the present disclosure, the degree of crosslinking of the gel polymer electrolyte in the second state ranges from 50% to 99%.

In some embodiments of the present disclosure, the gel polymer electrolyte further includes an electrolyte solution, and the percentage by weight of the electrolyte solution in the gel polymer electrolyte ranges from 60% to 98%. As such, when the gel polymer electrolyte obtained within the above ratio range is used in a battery, the capacity retention rate and the rate performance of the battery can be improved.

In some embodiments of the present disclosure, the gel polymer electrolyte includes a first crosslinking agent and a second crosslinking agent, and a de-crosslinking temperature of the second crosslinking agent is greater than or equal to 40°C, optionally 40°C to 120°C. As such, when the temperature of the battery is raised to the first temperature, i.e., the de-crosslinking temperature of the second crosslinking agent is reached, at least part of the second crosslinking agent is de-crosslinked, so that the capacity retention rate and the rate performance of the battery at the first temperature can be improved.

In some embodiments of the present disclosure, the first crosslinking agent includes at least one of an acrylate-based crosslinking agent and a conjugated diene.

In some embodiments of the present disclosure, the acrylate-based crosslinking agent includes at least one of ethylene glycol dimethacrylate, trimethylolpropanetrimethacrylate, tetraethylene glycol diacrylate, polyethylene glycol diacrylate, 1,4-butanediol diacrylate, 1,6-hexanediol diacrylate, trimethylolpropanetriacrylate, ethoxylatedtrimethylolpropanetriacrylate, propoxylatedtrimethylolpropanetriacrylate, di(trimethylolpropane) tetraacrylate, pentaerythritoltetraacrylate, ethoxylatedpentaerythritoltetraacrylate, dipentaerythritolpentaacrylate, and dipentaerythritolhexaacrylate. As such, with the use of the first crosslinking agent, the gel polymer is not completely de-crosslinked when the battery reaches the first temperature. This ensures that the gel polymer electrolyte can functions to improve the capacity retention rate and the rate performance of the battery at the first temperature.

In some embodiments of the present disclosure, the conjugated diene includes at least one of divinylbenzene and 1,3-butadiene.

In some embodiments of the present disclosure, the second crosslinking agent includes at least one of maleimide and an N-substituted derivative of maleimide. As such, with the use of the second crosslinking agent, at least part of the second crosslinking agent is de-crosslinked when the battery reaches the first temperature, so that the capacity retention rate and the rate performance of the battery at the first temperature can be improved.

In some embodiments of the present disclosure, a molar ratio of the first crosslinking agent to the second crosslinking agent is 0.5-5:1. As such, when the ratio of the first crosslinking agent to the second crosslinking agent is within the above range, the capacity retention rate and the rate performance of the battery at the first temperature can be improved.

In some embodiments of the present disclosure, the gel polymer electrolyte further includes a base material, and a monomer of the base material includes at least one of a vinyl group, an epoxy group, an allyl group, an acryloyl group, and a methacryloyl group. As such, the monomer of the base material can be respectively crosslinked with the first crosslinking agent and the second crosslinking agent in the process of polymerization to form the base material, so that the capacity retention rate and the rate performance of the battery are improved.

In some embodiments of the present disclosure, the monomer of the base materialincludes at least one of furfuryl methacrylate, ethylene glycol diglycidyl ether, 1,5-hexadiene diepoxide, glycerol propoxylatetriglycidyl ether, vinyl cyclohexene dioxide, 1,2,7,8-diepoxy octane, 4-vinyl cyclohexene dioxide, butyl glycidyl ether, diglycidyl 1,2-cyclohexanedicarboxylate, ethylene glycol diglycidyl ether, glycerol triglycidyl ether, and glycidyl methacrylate. As such, the monomer of the base material can be respectively crosslinked with the first crosslinking agent and the second crosslinking agent in the process of polymerization to form the base material, so that the capacity retention rate and the rate performance of the battery are improved.

A second aspect of the present disclosure provides a method for preparing a gel polymer electrolyte, including:
mixing and polymerizing a monomer of a base material, an initiator, a crosslinking agent, and an electrolyte solution to obtain a gel polymer electrolyte,
where the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state.

As such, when the gel polymer electrolyte prepared in the present disclosure is used in a battery, the capacity retention rate and the rate performance of the battery can be improved by raising the temperature of the battery to the second temperature after the battery experiences a capacity decrease after multiple cycles.

In some embodiments of the present disclosure, the crosslinking agent includes a first crosslinking agent and a second crosslinking agent, and a de-crosslinking temperature of the second crosslinking agent is greater than or equal to 40°C, optionally 40°C to 120°C. As such, when the temperature of the battery is raised to the first temperature, i.e., the de-crosslinking temperature of the second crosslinking agent is reached, at least part of the second crosslinking agent is de-crosslinked, so that the capacity retention rate and the rate performance of the battery at the first temperature can be improved.

In some embodiments of the present disclosure, a molar ratio of the monomer of the base material to the crosslinking agent is 1:2-10. As such, when the gel polymer electrolyte obtained within the above ratio range is used in a battery, the capacity retention rate and the rate performance of the battery at the first temperature can be improved.

A third aspect of the present disclosure provides a battery, including the gel polymer electrolyte according to the first aspect of the present disclosure or a gel polymer electrolyte prepared by the method according to the second aspect. As such, the battery has a high capacity retention rate and high rate performance.

A fourth aspect of the present disclosure provides a charging and discharging method of a battery, where
the battery includes a gel polymer electrolyte, the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state;
when the battery satisfies a first preset condition, the battery is charged and discharged at a first temperature; and
when the battery satisfies a second preset condition, the battery is charged and discharged at a second temperature.

As such, under different conditions, the capacity retention rate and the rate performance of the battery can be improved by adjusting the temperature of the battery.

In some embodiments of the present disclosure, where the first preset condition is that a ratio of a current internal resistance of the battery to an initial internal resistance of the battery is greater than 1.5.

In some embodiments of the present disclosure, the second preset condition is that the ratio of the current internal resistance of the battery to the initial internal resistance of the battery is less than or equal to 1.5.

In some embodiments of the present disclosure, the first preset condition is that a discharge rate of the battery is greater than 2C. In some embodiments of the present disclosure, the second preset condition is that the discharge rate of the battery is less than or equal to 2C.

A fifth aspect of the present disclosure provides an electrical device, including the battery according to the third aspect, where the battery is configured to provide electric energy.

Additional aspects and advantages of the present disclosure will be partly given in and partly apparent from the description below, or understood through practice of the present disclosure.

### BRIEF DESCRIPTION OF THE DRAWINGS

Various other advantages and benefits will become apparent to those of ordinary skill in the art upon reading the following detailed description of the preferred implementations. The accompanying drawings are only for the purpose of illustrating the preferred implementations and are not construed as limiting the present disclosure. In addition, in all the accompanying drawings, same parts are indicated by the same reference numerals. In the accompanying drawings:
FIG. 1 is a schematic structural diagram of a battery according to an embodiment of the present disclosure.
FIG. 2 is a schematic structural diagram of a battery module according to an embodiment of the present disclosure.
FIG. 3 is a schematic structural diagram of a battery pack according to an embodiment of the present disclosure.
FIG. 4 is an exploded view of FIG. 3.
FIG. 5 is a schematic diagram of an embodiment of an electrical device using a battery as a power source.

### List of reference numerals:

1: secondary battery; 2: battery module; 3: battery pack; 4: upper box body; 5: lower box body.

### DETAILED DESCRIPTION

The embodiments of the technical solutions of the present disclosure will be described in detail below. The following embodiments are only used to illustrate the technical solutions of the present disclosure more explicitly, and are thus only interpreted as examples, rather than used to limit the protection scope of the present disclosure.

As used herein, the term "embodiment" means that specific features, structures, or characteristics described in connection with the embodiment are embraced in at least one embodiment of the present disclosure. The occurrence of this phrase in different positions in the specification does not necessarily refer to the same embodiment, and is also not to be construed as a separate or alternative embodiment mutually exclusive to other embodiments. It is to be explicitly and implicitly understood by those having ordinary skills in the art that the embodiments described herein may be combined with other embodiments.

For the sake of conciseness, only some numerical ranges are specifically disclosed herein. However, any lower limit may be combined with any upper limit to form a range that is not clearly specified, any lower limit may be combined with another lower limit to form a range that is not clearly specified, and similarly, any upper limit may be combined with any other upper limit to form a range that is not clearly specified. In addition, each separately disclosed point or single numerical value may be used as a lower limit or an upper limit to combine with any other point or other single numerical value or with any other lower or upper limit to form a range that is not clearly recorded.

In the description of the present disclosure, the term "and/or" is merely an association to describe the associated objects. It can mean that there are three kinds of relationships, such as A and/or B, which means that A exists alone, A and B exist at the same time, and B exists alone. In addition, in this specification, the character "/" usually indicates an "or" relationship between the associated objects.

Unless otherwise defined, meanings of all technical and scientific terms used in this specification are the same as those usually understood by those skilled in the art to which the present disclosure belongs. Terms used herein are merely for describing specific embodiments, and are not intended to limit the present disclosure. In the specification, claims, and brief description of the drawings of the present disclosure, the terms "comprise," "include," "have," and any variant thereof are intended to cover a non-exclusive inclusion.

With the technological development and the increasing demand of electric vehicles and rechargeable mobile devices, research work related to secondary batteries as a representative of the new energy field have also developed rapidly.

Generally, an electrolyte needs to be dissolved in a solvent to prepare an electrolyte solution for use. The electrolyte is an ion conduction medium between positive and negative electrodes in a battery. At present, batteries available on the market mainly use a liquid electrolyte, and liquid-state ion batteries are prone to internal short circuit, electrolyte solution leakage, combustion, and other problems during use. To solve the above safety hazards of liquid ion batteries, researchers have proposed gel polymer electrolytes.

Gel polymer electrolytes have the advantages of solid electrolytes such as being less prone to short circuit and electrolyte solution leakage time, have a room-temperature ionic conductivity that can meet the requirements of practical applications, and also have good processability, allowing for flexible and diverse designs of batteries, and greatly promoting the development and large-scale application of the battery industry.

Conventional gel polymer electrolytes have elasticity similar to rubber and good processing properties. At present, gel electrolytes that most researches focus on include polyethylene oxide (PEO) gel electrolytes, polyacrylonitrile (PAN) gel electrolytes, polymethyl methacrylate (PMMA) gel electrolytes, polyvinylidene fluoride (PVDF) and PVDF copolymer gel electrolytes.

However, for a battery including the gel polymer electrolyte described above, the interface contact between an electrode of the battery and the gel polymer electrolyte deteriorates after multiple cycles, and the ionic conductivity of the electrolyte solution decreases, resulting in a significant decrease in the capacity retention rate and the rate performance of the battery.

In the present disclosure, the gel polymer electrolyte used has a first state at a first temperature and a second state at a second temperature. The first state and the second state are mutually transitionable. The first temperature is higher than the second temperature. The battery normally operates in the second temperature range, and discharges at a normal power. In this case, the battery electrolyte is semi-solid, with a low probability of problems such as internal short circuit, electrolyte solution leakage, and combustion of the battery. After the battery capacity deteriorates, the temperature of the battery is raised to the first temperature for charging and discharging. In this case, part of the gel polymer electrolyte depolymerizes, and the mobile phase in the gel polymer electrolyte increases, providing a low internal resistance and high ionic conductivity. Under different conditions, the corresponding charging and discharging temperature can be selected according to the specific situation of the battery by adjusting the operating temperature of the battery, to provide a high capacity retention rate and high rate performance.

The gel polymer electrolyte disclosed in the embodiments of the present disclosure is applicable to a gel-state battery, i.e., a semi-solid-state battery, and the battery disclosed in the embodiments of the present disclosure may be used in an electrical device using a battery as a power source or various energy storage systems using a battery as an energy storage element. The electrical device may include, but is not limited to, a mobile phone, a tablet, a notebook computer, an electric toy, an electric tool, an electric bicycle, an electric vehicle, a ship, a space vehicle, and the like. The electric toy may include a fixed or mobile electric toy, e.g., a game console, an electric vehicle toy, an electric ship toy, an electric airplane toy, and the like. The space vehicle may include an airplane, a rocket, a space shuttle, a spacecraft, and the like.

A first aspect of the present disclosure proposes a gel polymer electrolyte, where the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state.

The degree of crosslinking is a physical quantity used to indicate the crosslinking degree of a polymer, i.e., the fraction of the number Nc of crosslinked structural units in the crosslinked chain in the total number N of structural units. The degree of crosslinking may be measured using a nuclear magnetic resonance crosslinking densitometer. Specifically, in an embodiment of the present disclosure, the degree of crosslinking may be measured using an IIC XLDS-15 crosslinking density spectrometer.

The fluidity of the polymer deteriorates after crosslinking. Therefore, in the present disclosure, because the degree of crosslinking at the second temperature is higher than that at the first temperature, the fluidity of the gel polymer electrolyte at the second temperature is lower than that at the first temperature, i.e., the fluidity of the gel polymer electrolyte at the second temperature which is lower is higher than that at the first temperature which is higher. In other words, a higher degree of crosslinking indicates a lower fluidity.

Compared with the prior art, the present disclosure has at least the following beneficial effects. After the battery undergoes multiple cycles at the second temperature, a gap is formed between a battery electrode and an interface of the gel polymer electrolyte, leading to continuous deterioration of the battery capacity. When the temperature of the battery is raised to the first temperature, the gel polymer electrolyte depolymerizes, i.e., the degree of crosslinking of the gel polymer electrolyte decreases. In this case, the mobile phase in the gel polymer electrolyte increases, so that the battery electrode and the gel polymer electrolyte become tightly combined, thus restoring the capacity of the battery. In addition, as the mobile phase in the gel polymer electrolyte increases, the ionic conductivity of the gel polymer electrolyte can be improved, thus improving the rate performance of the battery.

In some embodiments of the present disclosure, a ratio of the degree of crosslinking of the gel polymer electrolyte in the first state to the degree of crosslinking in the second state ranges from 0.2 to 0.95:1, and for example, may be 0.3-0.9:1, 0.4-0.8:1, 0.5-0.7:1, etc. As such, when the ratio is within the above range, the degree of crosslinking of the gel polymer electrolyte in the first state is low and the degree of crosslinking of the gel polymer electrolyte in the second state is high, so that the capacity retention rate and the rate performance of the battery at the first temperature can be further improved.

In some embodiments of the present disclosure, the first temperature is greater than or equal to 40°C, and for example, may be 40°C to 120°C, 45°C to 120°C, 45°C to 110°C, 45°C to 100°C, 45°C to 90°C, 50°C to 80°C, 55°C to 75°C, 60°C to 70°C, etc. As such, within the above temperature range, the degree of crosslinking of the gel polymer is relatively low, and the mobile phase increases, so that the capacity retention rate and the rate performance of the battery at the first temperature can be further improved.

In some embodiments of the present disclosure, the degree of crosslinking of the gel polymer electrolyte in the first state ranges from 20% to 48.5%, and for example, may be 22% to 48.5%, 25% to 45%, 28% to 44%, 30% to 40%, 35% to 39%, etc. As such, within the above range of the degree of crosslinking, the degree of crosslinking of the gel polymer is relatively low, the mobile phase increases, and the electrode and the gel polymer electrolyte are tightly combined, so that the capacity retention rate and the rate performance of the battery at the first temperature can be improved.

In some embodiments of the present disclosure, the second temperature ranges from -25°C to 35°C, and for example, may be -22°C to 35°C, -20°Cto 30°C, -15°C to 25°C, -10°Cto 20°C, -5°Cto 15°C, 0°Cto 10°C, 3°Cto 8°C, etc. As such, the degree of crosslinking of the gel polymer is relatively high within the above temperature range, so that the probability of occurrence of internal short circuit, electrolyte solution leakage, combustion, and the like in the battery can be reduced.

In some embodiments of the present disclosure, the degree of crosslinking of the gel polymer electrolyte in the second state ranges from 50% to 99%, and for example, may be 52% to 99%, 55% to 95%, 60% to 90%, 65% to 85%, 70% to 80%, etc. As such, within the above range of the degree of crosslinking, the probability of occurrence of internal short circuit, electrolyte solution leakage, combustion, and the like in the battery can be reduced.

In some embodiments of the present disclosure, the gel polymer electrolyte further includes an electrolyte solution, and the percentage by weight of the electrolyte solution in the gel polymer electrolyte ranges from 60% to 98%, and for example, may be 60% to 95%, 65% to 90%, 70% to 85%, 75% to 80%, etc. As such, when the gel polymer electrolyte obtained within the above ratio range is used in a battery, the capacity retention rate and the rate performance of the battery can be improved.

In some embodiments of the present disclosure, the gel polymer electrolyte includes a first crosslinking agent and a second crosslinking agent, and a de-crosslinking temperature of the second crosslinking agent is greater than or equal to 40°C, and for example, may be 40°C to 120°C, 45°C to 120°C, 45°C to 110°C, 40°C to 100°C, 45°C to 90°C, 50°C to 80°C, 55°C to 75°C, 60°C to 70°C, etc.

De-crosslinking is the reverse reaction of cross-linking. Cross-linking is a reaction in which two or more molecules (generally linear molecules) bond to each other and cross-link into a network structure (a bulk molecule). De-crosslinking is a reaction in which a molecule of a network structure is decomposed into two or more molecules. For example, if cross-linking is carried out through the Diels-Alder reaction, de-crosslinking is the retro-Diels-Alder reaction.

The temperature at which the polymer in the gel polymer electrolyte and the second crosslinking agent start to be de-crosslinked is the de-crosslinking temperature, i.e., the temperature at which the polymer in the gel polymer electrolyte and the second crosslinking agent start to be de-crosslinked from the crosslinked state.

In the embodiments of the present disclosure, crosslinking and de-crosslinking of the polymer in the gel polymer electrolyte are reversible reactions, at least part of the second crosslinking agent undergoes a de-crosslinking reaction with the polymer base material at the first temperature which is high, and the second crosslinking agent undergoes a crosslinking reaction with the polymer base material at the second temperature which is low.

In the embodiments of the present disclosure, the presence of the first crosslinking agent is to prevent the gel polymer electrolyte from being completely de-crosslinked into a mobile phase at the first temperature which is high, so that when the de-crosslinking temperature of the second crosslinking agent is reached, the first crosslinking agent still maintains a crosslinked state, and at least part of the second crosslinking agent is de-crosslinked from the polymer in the gel polymer electrolyte, to ensure that the gel polymer electrolyte functions. As such, the capacity retention rate and the rate performance of the battery at the first temperature can be improved.

In some embodiments of the present disclosure, the first crosslinking agent may include at least one of an acrylate-based crosslinking agent and a conjugated diene. For example, the acrylate-based crosslinking agent includes at least one of ethylene glycol dimethacrylate, trimethylolpropanetrimethacrylate, tetraethylene glycol diacrylate, polyethylene glycol diacrylate, 1,4-butanediol diacrylate, 1,6-hexanediol diacrylate, trimethylolpropanetriacrylate, ethoxylatedtrimethylolpropanetriacrylate, propoxylatedtrimethylolpropanetriacrylate, di(trimethylolpropane) tetraacrylate, pentaerythritoltetraacrylate, ethoxylatedpentaerythritoltetraacrylate, dipentaerythritolpentaacrylate, and dipentaerythritolhexaacrylate. The conjugated diene includes at least one of divinylbenzene and 1,3-butadiene. As such, with the use of the first crosslinking agent, not all of the polymer in the gel polymer electrolyte is de-crosslinked from the second crosslinking agent at the first temperature. This ensures that the gel polymer electrolyte can functions to improve the capacity retention rate and the rate performance of the battery.

In some embodiments of the present disclosure, the second crosslinking agent includes at least one of maleimide and an N-substituted derivative of maleimide.

The N-substituted derivative of maleimide is an organic substance obtained by substituting a hydrogen atom on an imino group in maleimide with another group, e.g., N-phenylmaleimide (NPMI), N-butylmaleimide (BMI), etc. Any N-substituted derivative of maleimide falls within the scope of protection of the present disclosure.

As such, with the use of the second crosslinking agent, at least part of the second crosslinking agent is de-crosslinked from the polymer in the gel polymer electrolyte when the de-crosslinking temperature of the second crosslinking agent is reached, so that the capacity retention rate and the rate performance of the battery at the first temperature can be improved.

It can be understood that the first crosslinking agent and the second crosslinking agent in the present disclosure can be commercially available or can be prepared by a synthetic method in the art.

In some embodiments of the present disclosure, a molar ratio of the first crosslinking agent to the second crosslinking agent is 0.5-5:1, and for example, may be 0.7-5:1, 1-4.5:1, 1.5-4:1, 2-3.5:1, 2.5-2:1, etc. As such, when the ratio of the first crosslinking agent to the second crosslinking agent is within the above range, the polymer in the gel polymer electrolyte can be partially de-crosslinked at the first temperature which is high, and crosslinked at the second temperature which is low, so that the capacity retention rate and the rate performance of the battery at the first temperature can be improved.

In some embodiments of the present disclosure, the gel polymer electrolyte further includes a base material, and a monomer of the base material includes at least one of a vinyl group, an epoxy group, an allyl group, an acryloyl group, and a methacryloyl group. As such, the monomer of the base material can be respectively crosslinked with the first crosslinking agent and the second crosslinking agent in the process of polymerization to form the base material, and the polymer in the gel polymer electrolyte can be partially de-crosslinked at the first temperature which is high, and crosslinked at the second temperature which is low, so that the capacity retention rate and the rate performance of the battery are improved.

In some embodiments of the present disclosure, the monomer of the base materialincludes at least one of furfuryl methacrylate, ethylene glycol diglycidyl ether, 1,5-hexadiene diepoxide, glycerol propoxylatetriglycidyl ether, vinyl cyclohexene dioxide, 1,2,7,8-diepoxy octane, 4-vinyl cyclohexene dioxide, butyl glycidyl ether, diglycidyl 1,2-cyclohexanedicarboxylate, ethylene glycol diglycidyl ether, glycerol triglycidyl ether, and glycidyl methacrylate. As such, the monomer of the base material can be respectively crosslinked with the first crosslinking agent and the second crosslinking agent in the process of polymerization to form the base material, and the polymer in the gel polymer electrolyte can be partially de-crosslinked at the first temperature which is high, and crosslinked at the second temperature which is low, so that the capacity retention rate and the rate performance of the battery at the first temperature are improved.

It can be understood that the monomer of the base material in the present disclosure can be commercially available or can be prepared by a synthetic method in the art.

In some embodiments of the present disclosure, the gel polymer electrolyte includes a polymer matrix and an electrolyte solution, and the electrolyte solution may include an electrolyte salt and a solvent.

When the battery is a lithium-ion battery, the electrolyte salt may include, for example, one or more of more than one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorooxalate borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

When the battery is a sodium-ion battery, the electrolyte sodium salt may include, for example, at least one of sodium hexafluorophosphate, sodium difluorooxalate borate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethanesulfonyl)imide.

By way of example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte solution further includes an additive. For example, the additive may include a negative electrode film-forming additive or a positive electrode film-forming additive, and may also include an additive that can improve certain properties of the battery, e.g., an additive that improves the overcharge performance of the battery, an additive that improves the high-temperature performance of the battery, an additive that improves the low-temperature performance of the battery, etc.

A second aspect of the present disclosure provides a method for preparing a gel polymer electrolyte, including:
mixing and polymerizing a monomer of a base material, an initiator, a crosslinking agent, and an electrolyte solution to obtain a gel polymer electrolyte,
where the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state.

As such, when the gel polymer electrolyte prepared in the present disclosure is used in a battery, a gap is formed between a battery electrode and an interface of the gel polymer electrolyte after the battery undergoes multiple cycles at the second temperature, leading to continuous deterioration of the battery capacity. When the temperature of the battery is raised to the first temperature, the gel polymer electrolyte depolymerizes. In this case, the mobile phase in the gel polymer electrolyte increases, so that the battery electrode and the gel polymer electrolyte become tightly combined, thus restoring the capacity of the battery. In addition, as the mobile phase in the gel polymer electrolyte increases, the ionic conductivity of the gel polymer electrolyte can be improved, thus improving the rate performance of the battery.

In some embodiments of the present disclosure, the crosslinking agent includes a first crosslinking agent and a second crosslinking agent, and a de-crosslinking temperature of the second crosslinking agent is greater than or equal to 40°C, and for example, may be 40°C to 120°C, 45°C to 110°C, 40°C to 100°C, 45°C to 90°C, 50°C to 80°C, 55°C to 75°C, 60°Cto 70°C, etc. As such, when the temperature of the battery is raised to the first temperature, i.e., the de-crosslinking temperature of the second crosslinking agent is reached, at least part of the second crosslinking agent is de-crosslinked from the polymer in the gel polymer electrolyte, and the mobile phase in the gel polymer electrolyte increases, so that the capacity retention rate and the rate performance of the battery at the first temperature can be improved.

In some embodiments of the present disclosure, a molar ratio of the monomer of the base material to the crosslinking agent is 1:2-10, and for example, may be 1:3-10, 1:4-9, 1:5-8, 1:6-7, etc. As such, when the gel polymer electrolyte obtained within the above ratio range is used in a battery, the gel polymer electrolyte can be partially de-crosslinked from at least part of the second crosslinking agent at the first temperature which is high, and crosslinkedwith at least part of the second crosslinking agent at the second temperature which is low, so that the capacity retention rate and the rate performance of the battery at the first temperature can be improved.

It is understood that when the crosslinking agent includes the first crosslinking agent and the second crosslinking agent, the molar ratio of the monomer of the base material to the crosslinking agent is the ratio of the molar amount of the monomer to the sum of the molar amounts of the first crosslinking agent and the second crosslinking agent. In addition, the temperature at which the monomer of the base material, the initiator, the crosslinking agent, and the electrolytic solution are mixed and polymerized is not limited in the present disclosure. In some embodiments of the present disclosure, the polymerization temperature is 60°C to 80°C, for example, 65°C to 80°C, 65°C to 75°C, 65°C to 70°C, etc., so that the reaction is rapid and side reactions are few.

It should be noted that the features and advantages of the gel polymer electrolyte are also apply to the method for preparing the gel polymer electrolyte, and the details will not be repeated herein.

A third aspect of the present disclosure provides a battery, including the gel polymer electrolyte according to the first aspect of the present disclosure or a gel polymer electrolyte prepared by the method according to the second aspect. As such, the battery has a high capacity retention rate and high rate performance.

The battery refers to a battery that can be reused by activating its active material through charging after the battery is discharged.

A positive electrode, a separator, and a negative electrode may be wound sequentially into a housing, and then an electrolyte solution containing a polymer monomer is injected into the housing, so that an interior of the battery cell is infiltrated by the electrolyte solution containing the polymer monomer. A solidification reaction of the polymer monomer is initiated by external conditions, such as heat treatment, so as to form a polymer matrix, thereby ensuring that the interior of the battery cell is filled with a gel polymer electrolyte including the polymer matrix and the electrolyte solution. Alternatively, the separator is omitted, i.e., the positive electrode and the negative electrode are wound into the housing, and the electrolyte solution containing the polymer monomer is injected into the housing.

In some embodiments of the present disclosure, the battery may be a lithium-ion battery or a sodium-ion battery.

### [Positive electrode]

In the battery, the positive electrode generally includes a positive electrode current collector and a positive electrode active material layer arranged on the positive electrode current collector. The positive electrode active material layer includes a positive electrode active material.

The positive electrode current collector may be a conventional metal foil sheet or composite current collector (where a metal material may be disposed on a polymer substrate to form a composite current collector). By way of example, the positive electrode current collector may be an aluminum foil.

The specific type of the positive electrode active material is not limited, and an active material known in the art that can be used for a positive electrode of a battery can be adopted, and the positive electrode active material may be selected by those skilled in the art according to actual needs.

For example, when the battery is a lithium-ion battery, the positive electrode active material may include, for example, but not limited to, one or more of lithium transition metal oxide, a lithium-containing phosphate of an olivine structure, and modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the lithium-containing phosphate of the olivine structure may include, but are not limited to, one or more of lithium iron phosphate, a composite material of lithium iron phosphate and carbon, lithium manganese phosphate, a composite material of lithium manganese phosphate and carbon, lithium iron manganese phosphate, a composite material of lithium manganese iron phosphate and carbon, and modified compounds thereof. These materials are commercially available.

For example, when the battery is a sodium-ion battery, the positive electrode active material may include, for example, but not limited to, at least one of a layered transition metal oxide, a polyanionic compound, and a Prussian blue analog.

Examples of the layered transition metal oxide include:
Na₁₋ₓCuₕFeₖMnₗM¹ₘO_{2-y}, where M¹ is one or more of Li, Be, B, Mg, Al, K, Ca, Ti, Co, Ni, Zn, Ga, Sr, Y, Nb, Mo, In, Sn, and Ba, 0<x≤0.33, 0<h≤0.24, 0≤k≤0.32, 0<l≤0.68, 0≤m<0.1, h+k+1+m=1, and 0≤y<0.2;
Na_{0.67}Mn_{0.7}Ni_{z}M²_{0.3-z}O₂, where M² is one or more of Li, Mg, Al, Ca, Ti, Fe, Cu, Zn, and Ba, and 0<z≤0.1; and
NaₐLi_{b}Ni_{c}Mn_{d}FeₑO₂, where 0.67<a≤1, 0<b<0.2, 0<c<0.3, 0.67<d+e<0.8, and b+c+d+e=1.

Examples of the polyanionic compound include:
A¹_{f}M³_{g}(PO₄)ᵢOⱼX¹₃₋ⱼ, where A¹ is one or more of H, Li, Na, K, and NH₄, M³ is one or more of Ti, Cr, Mn, Fe, Co, Ni, V, Cu, and Zn, X¹ is one or more of F, Cl, and Br, 0<f≤4, 0<g≤2, 1≤i≤3, and 0≤j≤2;
NaₙM⁴PO₄X², where M⁴ is one or more of Mn, Fe, Co, Ni, Cu, and Zn, X² is one or more of F, Cl, and Br, and 0<n≤2;
NaₚM⁵_{q}(SO₄)₃, where M⁵ is one or more of Mn, Fe, Co, Ni, Cu, and Zn, 0<p≤2, and 0<q≤2; and
NaₛMnₜFe₃₋ₜ(PO₄)₂(P₂O₇), where 0<s≤4, 0≤t≤3, and for example, t is 0, 1, 1.5, 2, or 3.

Examples of the Prussian blue analog include:
AᵤM⁶ᵥ[M⁷(CN)₆]_{w}·xH₂O, where A is one or more of H⁺, NH₄⁺, an alkali metal cation, and an alkaline earth metal cation, M⁶ and M⁷ are each independently one or more of transition metal cations, 0<u≤2, 0<v≤1, 0<w≤1, and 0<x<6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, and Ra²⁺, and M⁶ and M⁷ are each independently one or more of cations of transition metal elements Ti, V, Cr, Mn, Fe, Co, Ni, Cu, Zn, Sn, and W.

The modified compounds of the above materials may be obtained by doping modification and/or surface coating modification on the materials.

Generally, the positive electrode active material layer further optionally includes a binder, a conductive agent, and other optional auxiliary agents.

By way of example, the conductive agent may include one or more of superconducting carbon, acetylene black, carbon black, Ketjen black, carbon dots, carbon nanotubes, Super P (SP), graphene, and carbon nanofibers.

By way of example, the binder may include one or more of styrene-butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

### [Negative electrode]

In the battery, the negative electrode generally includes a negative electrode current collector and a negative electrode active material layer arranged on the negative electrode current collector. The negative electrode active material layer includes a negative electrode active material.

The negative electrode current collector may be a conventional metal foil sheet or composite current collector (e.g., a metal material may be disposed on a polymer substrate to form a composite current collector). By way of example, the negative electrode current collector may be a copper foil.

The specific type of the negative electrode active material is not limited, and an active material known in the art that can be used for a negative electrode of a battery can be adopted, and the negative electrode active material may be selected by those skilled in the art according to actual needs. By way of example, the negative electrode active material may include, but is not limited to, one or more of artificial graphite, natural graphite, hard carbon, soft carbon, another silicon-based material, and a tin-based material. The silicon-based material may include one or more of elemental silicon, a silicon-oxygen compound (e.g., silicon oxide), a silicon-carbon composite, a silicon-nitrogen composite, and a silicon alloy. The tin-based material may include one or more of elemental tin, a tin-oxide compound, and a tin alloy. These materials are commercially available.

In some embodiments, to further increase the energy density of the battery, the negative electrode active material may include a silicon-based material.

Generally, the negative electrode active material layer further optionally includes a binder, a conductive agent, and other optional auxiliary agents.

By way of example, the conductive agent may include one or more of superconducting carbon, acetylene black, carbon black, Ketjen black, carbon dots, carbon nanotubes, graphene, and carbon nanofibers.

By way of example, the binder may include one or more of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

By way of example, the other optional auxiliary agents may include thickening and dispersing agents (e.g. sodium carboxymethyl cellulose (CMC-Na)) and a PTC thermistor material.

The separator is not particularly limited in the present disclosure, and any well-known separator of a porous structure having good electrochemical stability and mechanical stability may be used according to actual needs. For example, the separator may include a single-layer or multi-layer film containing one or more of glass fiber, non-woven fabric, polyethylene, polypropylene, and polyvinylidene fluoride.

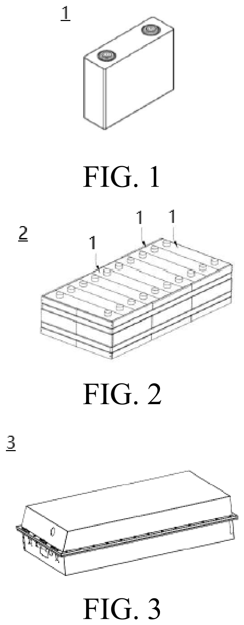

The shape of the battery is not particularly limited in the embodiments of the present disclosure, and may be a cylinder, a rectangle, or any other shape. For example, FIG. 1 shows a battery 1 having a rectangle structure as an example.

In some embodiments, the battery may include an outer package. The outer package is configured to package a positive electrode, a negative electrode, and an electrolyte.

In some embodiments, the outer package may include a housing and a cover plate. The housing may include a bottom plate and side plates connected to the bottom plate, and the bottom plate and the side plates enclose an accommodating cavity. The housing has an opening in communication with the accommodating cavity, and the cover plate can cover the opening, to close the accommodating cavity.

The positive electrode, the negative electrode, and the separator may be made into an electrode assembly by a winding process or a lamination process. The electrode assembly is encapsulated in the accommodating cavity. The number of electrode assemblies included in the battery may be one or more, and may be determined according to requirements.

In some embodiments, the outer package of the battery may be a hard housing, such as a hard plastic housing, an aluminum housing, or a steel housing.

The outer package of the battery may also be a soft package, such as a pouch-type soft package. The material of the soft package may be plastic, and for example, may include one or more of polypropylene (PP), polybutylene terephthalate (PBT), polybutylene succinate (PBS), and the like.

In some embodiments, the battery may be assembled into a battery module, and the number of batteries included in the battery module may be more than one, which may be specifically adjusted based on the application and capacity of the battery module.

FIG. 2 shows a battery module 2 as an example. Referring to FIG. 2, in the battery module 2, a plurality of batteries 1 may be sequentially arranged in a length direction of the battery module 2. Certainly, the plurality of secondary batteries 5 may also be arranged in any other manner. Further, the plurality of batteries 1 may be fixed by a fastener.

The battery module 2 may further include a casing having an accommodating space, and the plurality of secondary batteries 1 are accommodated in the accommodating space. In some embodiments, the battery module may be further assembled into a battery pack, and the number of battery modules included in the battery pack may be specifically adjusted based on the application and capacity of the battery pack.

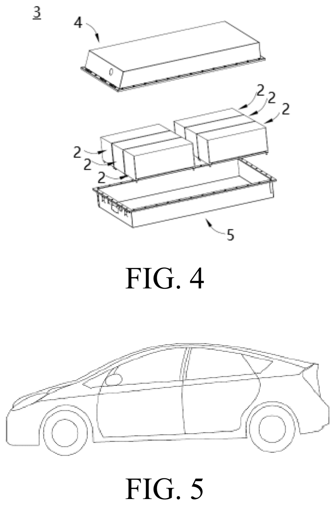

FIG. 3 and FIG. 4 show a battery pack 3 as an example. Referring to FIG. 3 and FIG. 4, the battery pack 3 may include a battery box and a plurality of battery modules 2 arranged in the battery box. The battery box includes an upper box body 4 and a lower box body 5. The upper box body 4 can cover the lower box body 5, to form an enclosed space for accommodating the battery modules 2. The plurality of battery modules 2 may be arranged in the battery box in any manner.

A fourth aspect of the present disclosure provides a charging and discharging method of a battery, where
the battery includes a gel polymer electrolyte, the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state;
when the battery satisfies a first preset condition, the battery is charged and discharged at a first temperature; and
when the battery satisfies a second preset condition, the battery is charged and discharged at a second temperature.

In some embodiments of the present disclosure, the battery normally operates in the second temperature range, and is charged and discharged at a normal power. In this case, the battery electrolyte is in a gel state, and the battery has good safety performance. When the capacity of the battery decreases after multiple cycles, the temperature of the battery is raised to the first temperature for charging and discharging. In this case, part of the gel polymer electrolyte depolymerizes, the mobile phase increases, and the gel polymer electrolyte has a low internal resistance and high ionic conductivity, to improve the capacity retention rate and the rate performance of the battery.

In some embodiments of the present disclosure, where the first preset condition is that a ratio of a current internal resistance of the battery to an initial internal resistance of the battery is greater than 1.5. Specifically, when the ratio of the current internal resistance of the battery to the initial internal resistance of the battery is greater than 1.5, the increase of the internal resistance leads to increased polarization and affects the rate performance of the battery, indicating that the capacity of the battery has decreased to a certain extent. In this case, the battery is charged and discharged at the first temperature, at least part of the second crosslinking agent in the gel polymer electrolyte is de-crosslinked from the base material, and the mobile phase in the gel polymer electrolyte increases, so that the internal resistance of the battery is reduced, the rate performance of the battery is improved, and the battery electrode is in close contact with the gel polymer electrolyte, thereby improving the capacity retention rate of the battery.

The internal resistance of the battery is the resistance to the flow of current in the battery when the battery is operating, and includes ohmic internal resistance and polarization internal resistance. The ohmic internal resistance is determined by the material, structure, contact resistance, and other factors of the battery. The polarization internal resistance is caused by electrochemical reaction and concentration difference, and is related to the active material and solid phase diffusion coefficient of the battery.

The initial internal resistance of the battery is the internal resistance of the battery at the time of completion of preparation of the battery.

In some embodiments of the present disclosure, the second preset condition is that the ratio of the current internal resistance of the battery to the initial internal resistance of the battery is less than or equal to 1.5.

In an embodiment of the present disclosure, if the ratio of the current internal resistance of the battery to the initial internal resistance of the battery is less than or equal to 1.5, the battery is not heated, and the battery is charged and discharged at the second temperature. If the ratio of the current internal resistance of the battery to the initial internal resistance of the battery is greater than 1.5, the battery is heated to the first temperature, so that part of the gel polymer electrolyte is de-crosslinked, and the mobile phase in the gel polymer electrolyte increases, to solve the interface problem between the electrode and the gel polymer electrolyte caused in the charging and discharging process, and reduce the internal resistance of the battery. If the ratio of the current internal resistance of the battery to the initial internal resistance of the battery is less than or equal to 1.5, the battery is charged and discharged at the second temperature.

In some embodiments of the present disclosure, the first preset condition is that a discharge rate of the battery is greater than 2C. In other words, when the battery needs to be charged and discharged at a high rate, the battery is adjusted to operate at the first temperature, so that at least part of the second crosslinking agent in the gel polymer electrolyte is de-crosslinked from the base material, and the mobile phase in the gel polymer electrolyte increases, thereby improving the rate performance of the battery.

In some embodiments of the present disclosure, the second preset condition is that the discharge rate of the battery is less than or equal to 2C. In other words, when the battery needs to be charged and discharged at a low rate, the battery is adjusted to operate at the second temperature, so that at least part of the second crosslinking agent in the gel polymer electrolyte is crosslinked with the base material, and the mobile phase in the gel polymer electrolyte decreases, thereby reducing the rate performance of the battery.

A fifth aspect of the present disclosure provides an electrical device, including the battery according to the third aspect, where the battery is configured to provide electric energy. As such, the electrical device has a long lifetime. Specifically, the battery can be used as a power supply of the electrical device, and can also be used as an energy storage unit of the electrical device. The electrical device may include, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

FIG. 5 shows an electrical device as an example. The electrical device includes a pure electric vehicle, a hybrid electric vehicle, a plug-in hybrid electric vehicle, or the like.

For another example, the electrical device may include a mobile phone, a tablet computer, a notebook computer, or the like. The electrical device is generally required to be light and thin, and may use a battery as a power source.

To make the technical problem to be solved by the present disclosure and the technical solutions and beneficial effects of the present disclosure clearer, the present disclosure is described in further detail with reference to examples and the accompanying drawings. Apparently, the embodiments described are merely some preferred embodiments, rather than all of the embodiments of the present disclosure. The following descriptions of at least one exemplary embodiment are merely illustrative, and in no way constitute any limitation on the present disclosure and the use of the present disclosure. All other embodiments obtained by those of ordinary skill in the art based on the embodiments of the present disclosure without making creative efforts shall fall within the protection scope of the embodiments of the present disclosure.

### Example 1

### Preparation of a secondary battery including a gel polymer electrolyte

### 1. Preparation of a precursor solution of the gel polymer electrolyte

A monomer of a base material, an initiator (azobisisobutyl cyanide), a first crosslinking agent, a second crosslinking agent, and an electrolyte solution were mixed to obtain the precursor solution. The method for preparing the electrolyte solution included: mixing ethylene carbonate (EC) and ethyl methyl carbonate (EMC) according to a weight ratio of 30:70, to obtain an organic solvent; dissolving a sufficiently dried lithium salt LiPF₆ in the organic solvent, where a concentration of the lithium salt is 1.0 mol/L; and uniformly mixing the mixture to give the electrolyte solution.

### 2. Preparation of secondary battery

### Preparation of positive electrode

A positive electrode active material LiNi_{0.8}Co_{0.1}Mn_{0.1}O₂ (NCM811), a conductive agent carbon black (Super P), and a binder polyvinylidene fluoride (PVDF) were uniformly mixed at a weight ratio of 96.2:2.7:1.1 in an appropriate amount of N-methylpyrrolidone (NMP) as a solvent, to form a positive electrode slurry. The positive electrode slurry was coated on an aluminum foil as a positive electrode current collector, then dried, cold pressed, sliced, and cut to obtain a positive electrode.

### Preparation of negative electrode

A negative electrode active material artificial graphite, a conductive agent carbon black (Super P), and binders styrene-butadiene rubber (SBR) and sodium carboxymethyl cellulose (CMC-Na) were uniformly mixed at a weight ratio of 96.4:0.7:1.8:1.1 in an appropriate amount of deionized water to give a negative electrode slurry. The negative electrode slurry was coated on a copper foil as a negative electrode current collector, then dried, cold pressed, sliced, and cut to obtain a negative electrode.

### The separator was a polyethylene film.

The positive electrode, the separator, and the negative electrode were laminated in sequence, to obtain an electrode assembly. The electrode assembly was placed in an outer package. The prepared precursor solution was injected into the dried secondary battery, heated to 60°C to 80°C so that the first crosslinking agent is crosslinked and cured, and then cooled down so that the second crosslinking agent is crosslinked and cured, to obtain a secondary battery.

Secondary batteries containing the gel polymer electrolyte of Examples 2 to 20 and Comparative Example were the same as that of Example 1 except for differences in parameters (see Table 1).

The compositions of the gel polymer electrolytes in the batteries of Examples 1 to 20 and Comparative Example of the present disclosure are shown in Table 1.

**Table 1**

| Serial number | Composition of first crosslinking agent | Composition of second crosslinking agent | De-crosslinkin g temperature of second crosslinking agent / °C | Molar ratio of first crosslinkin g agent to second crosslinkin g agent | Monomer of base material | Molar ratio of monomer of base material to crosslinkin g agent | **Percentag** e by weight of electrolyte solution | First temperatur e / °C | **Degree** of **crosslinkin** g in the first state / % | Second temperatur *e* / °C | Degree of crosslinkin g in the second state / % | Ratio of the degree of crosslinkin g in the first state to the degree of crosslinkin g in the second state |
|---|---|---|---|---|---|---|---|---|---|---|---|---|
| Example 1 | Ethylene glycol dimethacrylate | Maleimide | 55 | 3:1 | Furfuryl methacrylate | 1:5 | 80% | 60 | 38 | 10 | 91 | 0.4176 |
| Example 2 | Ethylene glycol dimethacrylate | Maleimide | 55 | 3:1 | Furfuryl methacrylate | 1:5 | 80% | 57 | 45 | 10 | 91 | 0.4945 |
| Example 3 | Ethylene glycol dimethacrylate | Maleimide | 55 | 3:1 | Furfuryl methacrylate | 1:5 | 80% | 70 | 32 | 10 | 91 | 0.3516 |
| Example 4 | Ethylene glycol dimethacrylate | Maleimide | 55 | 3:1 | Furfuryl methacrylate | 1:5 | 80% | 60 | 38 | 5 | 91 | 0.4176 |
| Example 5 | Ethylene glycol dimethacrylate | Maleimide | 55 | 3:1 | Furfuryl methacrylate | 1:5 | 80% | 60 | 38 | 35 | 99 | 0.3838 |
| Example 6 | Divinylbenzen e | Maleimide | 55 | 3:1 | Furfuryl methacrylate | 1:5 | 80% | 60 | 40 | 10 | 91 | 0.4396 |
| Example 7 | 1,4-butanediol diacrylate | Maleimide | 55 | 3:1 | Furfuryl methacrylate | 1:5 | 80% | 60 | 37 | 10 | 91 | 0.4066 |
| Example 8 | Ethylene glycol dimethacrylate | N-phenylmaleimid e | 58 | 3:1 | Furfuryl methacrylate | 1:5 | 80% | 60 | 45 | 10 | 85 | 0.5294 |
| Example 9 | Ethylene glycol dimethacrylate | N-butylmaleimide | 56 | 3:1 | Furfuryl methacrylate | 1:5 | 80% | 60 | 43 | 10 | 89 | 0.4831 |
| Example 10 | Ethylene glycol dimethacrylate | Maleimide | 55 | 0.5:1 | Furfuryl methacrylate | 1:5 | 80% | 60 | 29 | 10 | 89 | 0.3258 |
| Example 11 | Ethylene glycol dimethacrylate | Maleimide | 55 | 4.4:1 | Furfuryl methacrylate | 1:5 | 80% | 60 | 40 | 10 | 93 | 0.4301 |
| Example 11 | Ethylene glycol dimethacrylate | Maleimide | 55 | 5:1 | Furfuryl methacrylate | 1:5 | 80% | 60 | 41 | 10 | 94 | 0.4362 |
| Example 12 | Ethylene glycol dimethacrylate | Maleimide | 55 | 3:1 | 1,2,7,8-diepox y octane | 1:5 | 80% | 60 | 39 | 10 | 92 | 0.3913 |
| Example 13 | Ethylene glycol dimethacrylate | Maleimide | 55 | 3:1 | Butyl glycidyl ether | 1:5 | 80% | 60 | 35 | 10 | 89 | 0.3933 |
| Example 14 | Ethylene glycol dimethacrylate | Maleimide | 55 | 3:1 | Glycidyl methacrylate | 1:5 | 80% | 60 | 39 | 10 | 91 | 0.4286 |
| Example 15 | Ethylene glycol dimethacrylate | Maleimide | 55 | 3:1 | Furfuryl methacrylate | 1:5 | 60% | 60 | 38 | 10 | 91 | 0.4176 |
| Example 16 | Ethylene glycol dimethacrylate | Maleimide | 55 | 3:1 | Furfuryl methacrylate | 1:5 | 98% | 60 | 38 | 10 | 91 | 0.4176 |
| Example 17 | -- | Maleimide | 55 | -- | Furfuryl methacrylate | 1:5 | 80% | 60 | 23 | 10 | 75 | 0.3067 |
| Example 18 | Ethylene glycol dimethacrylate | Maleimide | 55 | 3:1 | Furfuryl methacrylate | 1:2 | 80% | 60 | 27 | 10 | 85 | 0.3176 |
| Example 19 | Ethylene glycol dimethacrylate | Maleimide | 55 | 3:1 | Furfuryl methacrylate | 1:10 | 80% | 60 | 47 | 10 | 94 | 0.5 |
| Example 20 | Ethylene glycol dimethacrylate | Maleimide | 55 | 3:1 | Furfuryl methacrylate | 1:6 | 80% | 60 | 44 | 10 | 93 | 0.4731 |
| Comparativ e Example | Ethylene glycol dimethacrylate | -- | | -- | Furfuryl methacrylate | 1:0.6 | 80% | 60 | 85 | 10 | 85 | 1 |

### Performance test of secondary battery:

### 1. Capacity retention rate

Taking Example 1 as an example, at the second temperature, the secondary battery was charged at a constant current of 0.5 C to a charge cut-off voltage of 4.2 V, then charged at a constant voltage until the current was 0.05 C and stood for 5 min, and discharged at a constant current of 0.33 C to a discharge cut-off voltage of 2.8 V and stood for 5 min, at which moment the discharge capacity C₀ of the battery was recorded. The battery was charged and discharged for 500 cycles according to this method, and the discharge capacity of the battery after 500 cycles was recorded as C₁.Cycling capacity retention rate of the secondary battery at the second temperature = C1/C0×100%

Conditions and steps of the method for measuring the cycling capacity retention rate of the secondary battery at the first temperature were the same as those of the method for measuring the cycling capacity retention rate of the secondary battery at the second temperature except that the temperature was adjusted to the first temperature.

The processes of testing the capacity retention rates of the secondary batteries of Examples 2-20 and Comparative Example were the same as the above testing process.

### 2. Rate performance

At the second temperature, the secondary battery was discharged at 0.2 C to 3.0 V and stood for 5 min, charged at 0.5 C to 4.4 V, and charged at constant voltage to 0.05 C and stood for 5 min. Then, the discharge rate was adjusted, and a discharge test was carried out at 2 C to obtain a discharge capacity. The rate of the capacity obtained at 2 C to the capacity obtained at 0.2 C was calculated, thus obtaining the rate performance of the battery.

Conditions and steps of the method for measuring the rate performance of the secondary battery at the first temperature were the same as those of the method for measuring the rate performance of the secondary battery at the second temperature except that the temperature was adjusted to the first temperature.

The processes of testing the rate performance of the secondary batteries of Examples 2-20 and Comparative Example were the same as the above testing process.

The results of the performance tests of the secondary batteries of Examples and Comparative Example are shown in Table 2.

**Table 2**

| Serial number | Capacity retention rate at the second temperature / % | Rate performance of the battery at the second temperature / % | Capacity retention rate at the first temperature / % | Rate performance of the battery at the first temperature / % |
|---|---|---|---|---|
| Example 1 | 72 | 46 | 81 | 65 |
| Example 2 | 72 | 46 | 76 | 63 |
| Example 3 | 72 | 46 | 83 | 66 |
| Example 4 | 65 | 45 | 81 | 65 |
| Example 5 | 75 | 58 | 81 | 65 |
| Example 6 | 72 | 46 | 80 | 64 |
| Example 7 | 72 | 46 | 82 | 66 |
| Example 8 | 74 | 47 | 76 | 63 |
| Example 9 | 73 | 46 | 78 | 64 |
| Example 10 | 73 | 49 | 83 | 67 |
| Example 11 | 68 | 44 | 77 | 61 |
| Example 11 | 67 | 46 | 74 | 55 |
| Example 12 | 69 | 44 | 80 | 64 |
| Example 13 | 73 | 46 | 82 | 65 |
| Example 14 | 73 | 46 | 80 | 64 |
| Example 15 | 65 | 40 | 77 | 54 |
| Example 16 | 75 | 48 | 83 | 66 |
| Example 17 | 65 | 43 | 75 | 60 |
| Example 18 | 75 | 49 | 83 | 67 |
| Example 19 | 65 | 44 | 74 | 58 |
| Example 20 | 68 | 45 | 76 | 60 |
| Comparative Example | 60 | 40 | 73 | 48 |

As can be seen from Table 2, in Examples 1 to 20 of the present disclosure, the capacity retention rate and the rate performance of the secondary battery decreased to a certain extent after 500 cycles at the second temperature, and after the operating temperature of the secondary battery was raised to the first temperature, the capacity retention rate and the rate performance of the secondary battery were restored. It can be seen that when the temperature of the battery is raised to the first temperature, the gel polymer electrolyte depolymerizes, i.e., the degree of crosslinking of the gel polymer electrolyte decreases. In this case, the mobile phase in the gel polymer electrolyte increases, so that the battery electrode and the gel polymer electrolyte become tightly combined, thus restoring the capacity of the battery. In addition, as the mobile phase in the gel polymer electrolyte increases, the ionic conductivity of the gel polymer electrolyte can be improved, thus improving the rate performance of the battery.

Compared with Examples 1 to 20, the Comparative Example did not include the case of including the first state at the first temperature and the second state at the second temperature, and the capacity retention rate and rate performance of the secondary battery were low both at the first temperature and the second temperature, and the initial capacity retention rate and rate performance cannot be restored at the first temperature. Therefore, it can be seen that the battery including the gel polymer electrolyte of the present disclosure still has a high capacity retention rate and rate performance after multiple cycles.

In conclusion, it should be noted that the foregoing embodiments are for description of the technical solutions of the present disclosure only rather than for limiting the present disclosure. Although the present disclosure has been described in detail with reference to the foregoing embodiments, those of ordinary skill in the art should appreciate that they can still make modifications to the technical solutions described in the embodiments or make equivalent replacements to some or all technical features thereof without departing from the scope of the technical solutions of the embodiments of the present disclosure. All such modifications and equivalent replacements shall fall within the scope of claims and specification of the present disclosure. Especially, as long as there is no structural conflict, the various technical features mentioned in each embodiment can be combined in any way. The present disclosure is not limited to the particular embodiments disclosed herein, but includes all technical solutions that fall within the scope of the claims.

## Claims

1. A gel polymer electrolyte, wherein the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state.

2. The gel polymer electrolyte according to claim 1, wherein a ratio of the degree of crosslinking of the gel polymer electrolyte in the first state to the degree of crosslinking in the second state ranges from 0.2 to 0.95:1.

3. The gel polymer electrolyte according to claim 1 or 2, wherein the first temperature is greater than or equal to 40°C, optionally 40°C to 120°C; and/or
the degree of crosslinking of the gel polymer electrolyte in the first state ranges from 20% to 48.5%.

4. The gel polymer electrolyte according toany one of claims 1 to 3, wherein the second temperature ranges from -25°C to 35°C; and/or
the degree of crosslinking of the gel polymer electrolyte in the second state ranges from 50% to 99%; and/or
the gel polymer electrolyte further comprises an electrolyte solution, and the percentage by weight of the electrolyte solution in the gel polymer electrolyte ranges from 60% to 98%.

5. The gel polymer electrolyte according toany one of claims 1 to 4, wherein the gel polymer electrolyte comprises a first crosslinking agent and a second crosslinking agent, and a de-crosslinking temperature of the second crosslinking agent is greater than or equal to 40°C, optionally 40°C to 120°C.

6. The gel polymer electrolyte according to claim 5, wherein the first crosslinking agent comprises at least one of an acrylate-based crosslinking agent and a conjugated diene; and/or
the acrylate-based crosslinking agent comprises at least one of ethylene glycol dimethacrylate, trimethylolpropanetrimethacrylate, tetraethylene glycol diacrylate, polyethylene glycol diacrylate, 1,4-butanediol diacrylate, 1,6-hexanediol diacrylate, trimethylolpropanetriacrylate, ethoxylatedtrimethylolpropanetriacrylate, propoxylatedtrimethylolpropanetriacrylate, di(trimethylolpropane) tetraacrylate, pentaerythritoltetraacrylate, ethoxylatedpentaerythritoltetraacrylate, dipentaerythritolpentaacrylate, and dipentaerythritolhexaacrylate; and/or
the conjugated diene comprises at least one of divinylbenzene and 1,3-butadiene; and/or
the second crosslinking agent comprises at least one of maleimide and an N-substituted derivative of maleimide.

7. The gel polymer electrolyte according to claim 5 or 6, wherein a molar ratio of the first crosslinking agent to the second crosslinking agent is 0.5-5:1.

8. The gel polymer electrolyte according toany one of claims 1 to 7, wherein the gel polymer electrolyte further comprises a base material, and a monomer of the base materialcomprises at least one of a vinyl group, an epoxy group, an allyl group, an acryloyl group, and a methacryloyl group.

9. The gel polymer electrolyte according to claim 8, wherein the monomer of the base material comprises at least one of furfuryl methacrylate, vinyl cyclohexene dioxide, 1,5-hexadiene diepoxide, glycerol propoxylatetriglycidyl ether, vinyl cyclohexene dioxide, 1,2,7,8-diepoxy octane, 4-vinyl cyclohexene dioxide, butyl glycidyl ether, diglycidyl 1,2-cyclohexanedicarboxylate, ethylene glycol diglycidyl ether, glycerol triglycidyl ether, and glycidyl methacrylate.

10. A method for preparing a gel polymer electrolyte, comprising:
mixing and polymerizing a monomer of a base material, an initiator, a crosslinking agent, and an electrolyte solution to obtain a gel polymer electrolyte,
wherein the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state.

11. The method according to claim 10, wherein the crosslinking agent comprises a first crosslinking agent and a second crosslinking agent, and a de-crosslinking temperature of the second crosslinking agent is greater than or equal to 40°C, optionally 40°C to 120°C.

12. The method according to claim 10 or 11, wherein a molar ratio of the monomer of the base material to the crosslinking agent is 1:2-10.

13. A battery, comprising the gel polymer electrolyte according to any one of claims 1 to 9 or a gel polymer electrolyte prepared by the method according to any one of claims 10 to 12.

14. A charging and discharging method of a battery, wherein
the battery comprises a gel polymer electrolyte, the gel polymer electrolyte has a first state at a first temperature and a second state at a second temperature, the first state and the second state are mutually transitionable, the first temperature is higher than the second temperature, and a degree of crosslinking of the gel polymer electrolyte in the second state is higher than a degree of crosslinking of the gel polymer electrolyte in the first state;
when the battery satisfies a first preset condition, the battery is charged and discharged at a first temperature; and
when the battery satisfies a second preset condition, the battery is charged and discharged at a second temperature.

15. The method according to claim 14, wherein the first preset condition is that a ratio of a current internal resistance of the battery to an initial internal resistance of the battery is greater than 1.5; and/or
the second preset condition is that the ratio of the current internal resistance of the battery to the initial internal resistance of the battery is less than or equal to 1.5.

16. The method according to claim 14, wherein the first preset condition is that a discharge rate of the battery is greater than 2C; and/or
the second preset condition is that the discharge rate of the battery is less than or equal to 2C.

17. An electrical device, comprising the battery according to claim 13.
